# FASCICULE DE BREVET EUROPEEN

(11) **EP 0 559 511 B1**
(45) Date de publication et mention de la délivrance du brevet: **12.11.1997**
(21) Numéro de dépôt: 93400414.4
(22) Date de dépôt: 18.02.1993
(51) Int. Cl.: B65D 30/06, B65D 75/50

(54) **Utilisation d'une chaîne de conteneurs pour matériaux solides granulaires**
Verwendung einer Behälterkette für körniges, festes Material
Use of a chain of containers for solid granular material

(30) Priorité: 06.03.1992 FR 9202813
(43) Date de publication de la demande: 08.09.1993
(73) Titulaire: Benzaria, Jacques Raphäel, 60230 Chambly (FR)
(72) Inventeur: Benzaria, Jacques, F-60230 Chambly (FR)
(74) Mandataire: Andreeff, François

(56) Documents cités:
- EP-A- 0 229 491
- EP-A- 0 494 550
- CH-A- 374 929
- US-A- 3 925 959

## Description

L'invention est relative à l'utilisation de chaînes de conteneurs pour matériaux solides granulaires en général, comprenant une pluralité de conteneurs individuels reliés entre eux et dont la forme des conteneurs est sensiblement tétraédrique. Un conteneur individuel est décrit notamment dans EP-A-494,550, une demande de brevet européen telle que définie à l'art. 54(3) CBE.

Compte tenu de l'excellent rapport surface-volume lié en particulier à la forme tétraédrique des conteneurs, ces chaînes de conteneurs possèdent des qualités particulièrement adaptées au remplissage de colonnes creuses par de la matière granulaire.

Il est en effet bien connu de l'homme du métier qu'un rapport surface-volume particulièrement élevé est favorable à la réaction chimique entre la phase solide contenue dans les conteneurs, dont l'enveloppe externe est poreuse, et la phase extérieure liquide ou gazeuse. Ce système est particulièrement applicable à toute réaction hétérogène demandant de l'aire interfaciale.

Il est connu par ailleurs qu'il est pratiquement impossible de réaliser, au sein d'une colonne, un empilement totalement compact de tétraèdres réguliers ; le taux de remplissage mesuré se situe dans ce cas entre : 0,45 et 0,50 et la disposition des tétraèdres ne peut se prévoir. On a donc, dans la présente invention, imaginé l'utilisation de chaînes de tétraèdre. Ce type de chaîne est décrit dans US-A-3,925,959 relatif à des moyens d'emballage de volume restreint. L'une des supériorités des chaînes de tétraèdres, utilisée pour la présente invention, est la possibilité d'effectuer un remplissage connu, en disposition et répartition, permettant de limiter au maximum la perte de charge existant dans la colonne et d'obtenir une perte de charge inférieure à celle que l'on obtient par un remplissage en vrac de conteneurs non reliés entre eux.

A cet effet, l'invention a pour principal objet l'utilisation dans le domaine de la mise en contact de fluides avec des solides, d'une chaîne de conteneurs pour matériaux solides granulaires (après remplissage d'au moins un certain nombre de conteneurs par l'un desdits solides) comprenant une pluralité de conteneurs individuels reliés les uns aux autres, ayant chacun une enveloppe fermée, perméable aux gaz et/ou aux liquides et dont les pores sont suffisamment petits pour retenir des matériaux solides granulaires ; chaque conteneur comporte quatre faces sensiblement triangulaires constituant sensiblement un tétraèdre ; chaque conteneur est relié à au moins un conteneur contigu par l'une de ces arêtes par une liaison commune, de préférence par une soudure commune de deux arêtes adjacentes desdits conteneurs contigus.

Un arrangement particulièrement avantageux et simple à réaliser est de disposer côte à côte des chaînes ou chapelets de tétraèdres de longueur égale à celle de la colonne à remplir ou à préparer des éléments de colonnes standard ajustables l'un sur l'autre. Cette disposition permet de réaliser des colonnes présentant des taux de remplissage de : 0,30 à 0,90 et de préférence de 0,55 à 0,90, c'est-à-dire des taux de vide de : 0,70 à 0,10 et de préférence de 0,45 à 0,10.

A titre d'exemple non limitatif, la composition des chaînes peut comprendre un certain nombre de conteneurs contenant des matériaux solides granulaires entrecoupés de conteneurs ne contenant pas de matériaux solides granulaires, par exemple de conteneurs vides, de façon à bien contrôler la quantité de solides granulaires sur un parcours déterminé. Ce remplissage de colonnes permet une excellente stabilité mécanique et une bonne résistance à l'écrasement qui sont des qualités appréciables d'une colonne à remplissage.

Un objet important de la présente invention est d'utiliser des masses de contacts pour la catalyse, l'échange d'ions, l'adsorption, la distillation et particulièrement la distillation catalytique ou distillation-réactive. Les chaînes de conteneurs décrites ici sont également utilisables dans tout procédé comportant la mise en contact de fluides avec des solides après remplissage d'au moins un certain nombre de conteneurs, par exemple par l'un des solides cités ci-après.

L'enveloppe perméable qui constitue la chaîne peut être formée à partir de tout matériau solide laissant passer les gaz et/ou les liquides, mais dont les ouvertures ont une taille suffisamment petites pour retenir les grains des matériaux solides granulaires que les conteneurs peuvent renfermer.

Comme matériau, on peut utiliser pour former les enveloppes des conteneurs par exemple un matériau tissé ou non-tissé, la matière étant par exemple d'origine naturelle, minérale, végétale, animale, ou d'origine synthétique. Comme matière on peut citer, à titre d'exemples non limitatifs, le polypropylène, les polyesters, les polyamides, l'aluminium, le cuivre, le titane, le nickel, le platine et l'acier inoxydable. L'enveloppe des conteneurs pourra être formée à partir d'un tissu métallique, d'un métal déployé ou d'un métal perforé. Cette enveloppe peut être constituée d'un grillage ou treillis de préférence métallique ou d'une surface métallique poreuse. La largeur de malle du grillage ou treillis sera suffisamment petite pour retenir les matériaux solides particulaires employés. On évitera, pour la fabrication des enveloppes des conteneurs, les matériaux trop souples qui donneraient une structure tétraédrique douée d'une résistance insuffisante à l'écrasement. On préfère une certaine rigidité pour que la structure conserve sa forme, mais les matériaux excessivement raides et cassants seront évités, sinon la formation du conteneur serait difficile ou impossible. De préférence, les différents conteneurs formant la chaîne auront une hauteur calculée entre une base et le sommet opposé égale à 0,5 à 2 fois et de préférence de 0,8 à 0,9 fois la longueur moyenne des arêtes.

Les conteneurs seront remplis soit d'agents d'adsorptions connus et, en particulier des charbons actifs dont les surfaces auront été traitées ou non pour être par exemple adaptées au traitement des eaux, ou comme simples supports pour véhiculer un agent acide pouvant être de l'acide sulfurique, du tamis moléculaire ou du carbone sulfoné. Comme agent catalytique solide, on peut envisager tous les catalyseurs solides en grain et en particulier les catalyseurs d'hydrogénation et de déshydrogénation. Les conteneurs peuvent également renfermer des enzymes fixées sur un support solide. Dans ce cas, ces chaînes peuvent être utilisées dans la bio-catalyse utilisant par exemple le gaz carbonique (C0₂₎ dans les conditions physiques super-critiques entre autres ou dans tout autre réaction mettant en oeuvre d'autres enzymes dans des conditions ordinaires. Dans le cas des catalyseurs d'alkylation, le matériau solide granulaire peut être tout type de résines échangeuses d'ions, et en particulier les résines sulfonées, par exemple celle du type polystyrène sulfoné comme les résines AMBERLYST® ou DOWEX®.

L'utilisation des chaînes de conteneurs dans la présente invention est particulièrement intéressante dans les réactions du type gaz-liquide dont un exemple non limitatif est la synthèse du méthyltertiobutyléther (M.T.B.E) à partir d'isobutène et de méthanol.

Un autre objet de la présente invention est l'utilisation d'une chaîne de conteneur dont la fabrication comprend les étapes suivantes :
a) à partir d'une bande, en matière perméable aux gaz et/ou aux liquides et dont les pores ont une taille suffisamment petite pour retenir des matériaux solides granulaires, destinée à faire l'enveloppe du conteneur, on préforme celle-ci pour former un cylindre ou tube en soudant les deux côtés dans le sens du déroulement de la bande,
b) on rapproche jusqu'au contact et fixe l'une à l'autre deux demi-circonférences d'une première extrémité de la portion cylindrique ou équivalente du tube formé à l'étape a) de manière à fermer cette première extrémité,
c) on introduit de la matière granulaire dans le tube formé à l'étape a) , dont l'extrémité fermée au cours de l'étape b) constitue la base,
d) on rapproche jusqu'au contact et fixe l'une à l'autre deux demi-circonférences de la seconde extrémité de la portion cylindrique ou équivalente du tube, ledit rapprochement étant effectué dans une direction sensiblement orthogonale par rapport à celle du rapprochement de l'étape b) , de manière à fermer cette seconde extrémité et à former un conteneur sensiblement tétraédrique, et
e) on répète les étapes c) et d) ou l'étape d) seule de manière à former une succession de conteneurs reliés les uns aux autres par une de leur arête avec ou sans espace entre lesdits conteneurs. La répétition de l'étape d) seule permet de former des conteneurs vides et celle des étapes c) et d) des conteneurs renfermant des particules solides en grain.

### EXEMPLE 1

On effectue la purification d'un hydrocarbure impur par adsorption sélective des impuretés. La charge d'hydrocarbures impure est introduite en continu dans une colonne de 50 centimètres (cm) de longueur et de 8,7 cm de diamètre, équipée de 20 chaînes de tétraèdres rangés côte à côte et dont l'enveloppe est en métal tissé (acier inoxydable), le contenu des conteneurs est du charbon actif sulfoné.

La charge employée est de l'heptane contenant 500 ppm en poids de Dibenzothiophène. Elle est introduite par le bas de la colonne à un débit de 1,5 l/h (litre par heure). L'effluent récupéré au sommet de la colonne est analysé. On obtient un taux de désulfuration de l'ordre de 90 %.

Ce taux est considérablement plus élevé en comparaison à celui obtenu avec les techniques conventionnelles essayées.

### EXEMPLE 2

On réalise la synthèse du diméthyl-2,3 butène-2 (point d'ébullition sous pression normale 73,2 °C) par isomérisation catalytique diméthyl-2,3 butène-1 (point d'ébullition sous pression normale 56 °C). L'équilibre thermodynamique est déplacé en continu par une distillation réactive, le produit de la réaction ayant le point d'ébullition le plus élevé s'accumulant dans le fond du réacteur.

La réaction s'effectue dans un ballon surmonté d'une colonne de 50 cm de long et 8,7 cm de diamètre, équipée de 20 chaînes de tétraèdres rangés côte à côte. Les conteneurs de chaque chaîne renferment un échangeur d'ions acides en grain servant de catalyseur pour l'isomérisation (le catalyseur employé est une résine AMBERLYST C®). Le taux de vide de la colonne catalytique est de l'ordre de 0,85.

Pour la réaction on utilise du diméthyl-2,3 butène qui est un mélange des deux isomères : diméthyl-2,3 butène-2 et diméthyl-2,3 butène-1. Ce mélange est introduit dans le ballon et chauffé au reflux total à sa température d'ébulition ; le débit du reflux est de l'ordre de 2 l/h.

Au bout de 2 heures on récupère dans le ballon le diméthyl-2,3 butène-2 avec un rendement de 98 %. Ce taux de conversion ne peut être réalisé dans un réacteur conventionnel.

## Revendications

1. Utilisation d'une chaîne de conteneurs dans le domaine de la mise en contact de fluide avec des solides après remplissage d'au moins un certain nombre de conteneurs par l'un desdits solides, ladite chaîne de conteneurs pour matériaux solides granulaires comprenant une pluralité de conteneurs individuels reliés les uns aux autres ayant chacun une enveloppe fermée, perméable aux gaz et/ou aux liquides et dont les pores sont suffisamment petits pour retenir des matériaux solides granulaires, chaque conteneur comportant quatre faces sensiblement triangulaires constituant sensiblement un tétraèdre, chaque conteneur étant relié à au moins un conteneur contigu par l'une de ces arêtes par une liaison commune.

2. Utilisation selon la revendication 1 d'une chaîne de conteneurs dans laquelle ladite liaison commune par l'une desdites arêtes est réalisée par une soudure commune de deux arêtes adjacentes des dits conteneurs contigus.

3. Utilisation selon l'une des revendications 1 à 2, d'une chaîne de conteneurs dans laquelle l'enveloppe des conteneurs est constituée d'un grillage ou treillis, de préférence métallique, ou d'une surface métallique poreuse.

4. Utilisation selon l'une des revendications 1 à 3, d'une chaîne de conteneurs dans laquelle l'enveloppe des conteneurs est constituée à partir d'un matériau tissé ou non tissé choisi dans le groupe formé par les matériaux d'origine synthétique et les matériaux d'origine naturelle.

5. Utilisation selon l'une des revendications 1 à 4 d'une chaîne de conteneurs dans laquelle l'enveloppe des conteneurs est formée à partir d'un tissu métallique, d'un métal déployé ou d'un métal perforé.

6. Utilisation selon l'une des revendications 1 à 5, d'une chaîne de conteneurs dans laquelle chaque conteneur renferme une matière granulaire choisie dans le groupe formé par les catalyseurs, les résines échangeuses d'ions, les agents d'adsorption, les enzymes fixées sur un support solide, les résines échangeuses de type sulfonique, les tamis moléculaires et du carbone sulfoné.

7. Utilisation selon l'une des revendications 1 à 6 d'une chaîne de conteneurs dans laquelle la fabrication d'une chaîne de conteneurs est caractérisée en ce qu'elle comprend les étapes suivantes :
a) à partir d'une bande, en matière perméable aux gaz et/ou aux liquides et dont les pores ont une taille suffisamment petite pour retenir des matériaux solides granulaires, destinée à faire l'enveloppe du conteneur, on préforme celle-ci pour former un cylindre ou tube en soudant les deux côtés dans le sens du déroulement de la bande,
b) on rapproche jusqu'au contact et fixe l'une à l'autre deux demi-circonférences d'une première extrémité de la portion cylindrique ou équivalente du tube formé à l'étape a) de manière à fermer cette première extrémité,
c) on introduit de la matière granulaire dans le tube formé à l'étape a), dont l'extrémité fermée au cours de l'étape b) constitue la base,
d) on rapproche jusqu'au contact et fixe l'une à l'autre deux demi-circonférences de la seconde extrémité de la portion cylindrique ou équivalente du tube, ledit rapprochement étant effectué dans une direction sensiblement orthogonale par rapport à celle du rapprochement de l'étape b), de manière à fermer cette seconde extrémité et à former un conteneur sensiblement tétraédrique, et
e) on répète les étapes c) et d) ou l'étape d) seule de manière à former une succession de conteneurs reliés les uns aux autres par une de leur arête avec ou sans espace entre lesdits conteneurs.

8. Utilisation selon l'une des revendications 1 à 5 ou 7 d'une chaîne de conteneurs dans laquelle certains conteneurs ne contiennent pas de matériaux solides granulaires.

9. Utilisation selon l'une des revendications 1 à 8 d'une chaîne de conteneurs, pour la réalisation d'une distillation catalytique, ladite chaîne comportant un certain nombre de conteneurs renfermant un catalyseur convenable.

10. Utilisation d'une chaîne de conteneurs selon l'une des revendications 1 à 9 dans laquelle un certain nombre de conteneurs renferment, à titre de catalyseur, une résine échangeuse d'ions.

## Claims

1. Use of a chain of containers for contacting a fluid with solid materials, following the filling of at least a certain number of containers by one of said solid materials, incorporating a plurality of interconnected individual containers, each having a sealed envelope, permeable to gases and/or liquids and whose pores are sufficiently small to retain the solid granular materials, each container having four substantially triangular faces substantially forming a tetrahedron, each container being connected to at least one contiguous container by one of its edges by means of a common connection, preferably by a common weld of two adjacent edges of said contiguous containers.

2. Use according to claim 1 of a chain of containers wherein the common connection by one of the said edges is carried out by a common weld of two adjacent edges of said contiguous containers.

3. Chain of containers according to one of claims 1 to 2, wherein the envelope of the containers is constituted by a preferably metallic netting or lattrice, or a porous metallic surface.

4. Use according to one of claims 1 to 3 of a chain of containers wherein the envelope of containers is formed from a woven or non-woven material chosen from within the group formed by synthetic materials and natural materials.

5. Use according to one of claims 1 to 4 of a chain of containers wherein the envelope of containers is formed from a metal gauze, an expanded metal or a perforated metal.

6. Use according to any one of the claims 1 to 5 of a chain of containers wherein each container contains a granular material chosen from within the group formed by catalysts, ion exchange resins, adsorption agents, enzymes fixed to a solid support, sulphonic exchange resins, molecular sieves and sulphonated carbon.

7. Use according to any of the claims 1 to 6 of a chain of containers wherein the production of a chain of containers is characterized in that it comprises the following stages :
a) from a belt made for a material permeable to gases and/or liquids and whose pores have a sufficiently small size to retain solid granular materials and used for forming the container envelope, preshaping thereof takes place in order to form a cylinder or a tube by welding together the two sides in the direction of the unwinding of the belt,
b) two semicircumferences of a first end of the cylindrical or equivalent portion of the tube formed in stage a) are moved together up to contact and fixed to one another, so as to seal said first end,
c) granular material is introduced into the tube formed in a), whose end sealed during stage b) constitutes the base,
d) two semicircumferences of the second end of the cylindrical or equivalent portion of the tube are moved together up to contact and fixed to one another, said approach taking place in a direction substantially orthogonal to that of the approach in stage b), so as to seal said second end and form a substantially tetrahedral container and
e) stages c) and d) are repeated, or only stage d), so as to form a succession of containers connected by one of their edges with or without a gap between said containers.

8. Use according to any of the claims 1 to 5 or 7 of a chain of containers wherein certain containers do not contain solid granular materials.

9. Use according to any one of the claims 1 to 8 of a container chain for carrying out a catalytic distillation, said chain having a certain number of containers containing an appropriate catalyst.

10. Use of a chain of containers according to any one of the claims 1 to 9 wherein a certain number of containers contain, as a catalyst, an ion exchange resin.

## Patentansprüche

1. Verwendung einer Behälterkette um Flüssigkeit mit festem Material in Verbindung zu bringen nachdem mindestens eine gewisse Anzahl der Behälter mit einer dieser festen Materialien gefüllt wurde, wobei die Behälterkette für die festen, körnigen Materialien eine Vielzahl einzelner, unter einander verbundener Behälter umfaßt, die jeweils eine geschlossene, für Gas und/oder Flüssigkeiten durchlässige Umhüllung aufweisen und deren Poren ausreichend klein sind um die festen, körnigen Materialien zurück zu halten, und jeder Behälter vier im wesentlichen dreieckige Seiten aufweist, die im wesentlichen Tetraeder bilden und jeder Behälter mindestens mit einem benachbarten Behälter über eine dieser Kanten für eine gemeinsame Verbindung verbunden ist.

2. Verwendung gemäß Anspruch 1 einer Behälterkette, in der diese gemeinsame Verbindung über eine dieser Kanten durch eine gemeinsame Schweißung zweier neben einander liegender Kanten dieser benachbarten Behälter gebildet ist.

3. Verwendung gemäß einer der Ansprüche 1 bis 2 einer Behälterkette, in der diese Umhüllung der Behälter durch ein Gitter oder Geflecht, vorzugsweise aus Metall oder mit einer metallisch, porösen Oberfläche, gebildet ist.

4. Verwendung gemäß einer der Ansprüche 1 bis 3 einer Behälterkette, in der diese Umhüllung der Behälter aus einem gewebten oder nicht gewebten Material gebildet ist, das aus der durch die Gruppe der Materialien mit synthetischer Herkunft und der Materialien mit natürlicher Herkunft ausgewählt ist.

5. Verwendung gemäß einer der Ansprüche 1 bis 4 einer Behälterkette, in der diese Umhüllung der Behälter aus einem metallischen Gewebe eines gestreckten Metalls oder eines perforierten Metalls gebildet ist.

6. Verwendung gemäß einer der Ansprüche 1 bis 5 einer Behälterkette, in der jeder Behälter ein körniges Material umschließt, das aus der durch die Katalysatoren gebildeten Gruppe, Ionenaustauscher-Harzen, Adsorptionsmitteln, auf einer festen Halterung befestigten Enzymen, schweflige Harze, Molekularsieben und schwefligen Kohlenstoff ausgewählt ist.

7. Verwendung gemäß einer der Ansprüche 1 bis 6 einer Behälterkette, wobei die Herstellung einer Behälterkette gekennzeichnet ist durch folgende Schritte:
a) von einem Band aus für Gas und/oder Flüssigkeiten durchlässigem Material deren Poren eine ausreichend kleine Größe aufweisen, um die festen, körnigen Materialien zurück zu halten, die die Umhüllung des Behälters bilden sollen, wird diese vorgeformt, um einen Zylinder oder Röhre zu bilden, wobei die zwei Seiten in der Richtung der Anwicklung des Bands verschweißt werden,
b) zwei Halbumfänge eines ersten Endes des zylindrischen Abschnitts oder des entsprechenden der in Schritt a geformten Rohres werden bis zur Anlage aneinander angenähert und miteinander befestigt, so daß dieses erste Ende geschlossen ist,
c) körniges Material wird in das in Schritt a geformte Rohr eingeführt, dessen beim Schritt b geschlossenes Ende die Basis bildet,
d) zwei Halbumfänge des zweiten Endes des zylindrischen Abschnitts oder des entsprechenden Rohres werden bis zur Anlage aneinander angenähert und miteinander befestigt, wobei die Annäherung im wesentlichen in einer Richtung durchgeführt wird, die rechtwinklig ist mit Bezug auf die der Annäherung beim Schritt b, so daß dieses zweite Ende geschlossen wird und ein im wesentlichen tetraederförmiger Behälter gebildet wird, und
e) die Schritte c) und d) alleine wiederholt werden, um eine Folge von untereinander verbundenen Behältern zu bilden, die untereinander über eine ihrer Kanten mit oder ohne Abstand zwischen den Behältern verbunden sind.

8. Verwendung gemäß einer der Ansprüche 1 bis 5 oder 7 einer Behälterkette, in der einige Behälter kein festes, körniges Material enthalten.

9. Verwendung gemäß einer der Ansprüche 1 bis 8 einer Behälterkette zur Durchführung einer katalytischen Destillation, wobei die Kette eine gewisse Anzahl Behälter umfaßt, die einen geeigneten Katalysator einschließen.

10. Verwendung einer Behälterkette gemäß einer der Ansprüche 1 bis 9, in der eine gewisse Anzahl Behälter als Katalysator ein Ionen tauschendes Harz umfassen.
